Europäisches Patentamt

European Patent Office

Office européen des brevets

(19)

(11) Publication number: **0 026 584**

A1

(12) **EUROPEAN PATENT APPLICATION**

(21) Application number: **80303085.7**

(22) Date of filing: **03.09.80**

(51) Int. Cl.³: **H 02 K 7/18**
**H 02 K 21/24, F 02 C 6/00**

(30) Priority: **05.09.79 GB 7930683**
**26.02.80 GB 8006478**

(43) Date of publication of application:
**08.04.81 Bulletin 81/14**

(84) Designated Contracting States:
**DE FR IT**

(71) Applicant: **Needham, Robert Williams**
**9 Ventnor Lodge Ventnor Villas**
**Hove Sussex(GB)**

(71) Applicant: **Corbett, Aubrey**
**1 Ashfield Road**
**Kenilworth CV8 2BE(GB)**

(72) Inventor: **Needham, Robert Williams**
**9 Ventnor Lodge Ventnor Villas**
**Hove Sussex(GB)**

(72) Inventor: **Corbett, Aubrey**
**1 Ashfield Road**
**Kenilworth CV8 2BE(GB)**

(74) Representative: **Burford, Anthony Frederick et al,**
**W.H. Beck, Greener & Co. 7 Stone Buildings Lincoln's**
**Inn**
**London WC2A 3SZ(GB)**

(54) **Improvements in and relating to turbo electric generators.**

(57) The invention relates to turbo-electric generators of less than 1000 kw maximum output having a gas turbine prime mover operating on a closed circuit system for the working fluid and an electric generator with an armature sufficiently free of continuous magnetic material to generate alternating electric power at a frequency which is at least equal to the rotational speed of said turbine without prohibitive hysteresis and like iron losses. According to the invention, the turbine (3,4) and generator (12) are coupled directly together by a coupling which extends between the turbine housing (14) and the generator housing (15). Preferably, the generator housing (15) is pressurised to substantially the same pressure as that of the working fluid. It is also preferred that the generator (12) comprises a series of axially aligned and relatively rotatable disc-shaped winding assemblies and a coaxial series of disc-shaped permanent magnet assemblies interleaved with the winding assemblies and providing magnetic lines of force parallel to the common axis.

./...

FIG. 1.

- 1 -

IMPROVEMENTS IN AND RELATING TO TURBO

ELECTRIC GENERATORS

This invention relates to turbo electric generators of less than 1000 kw maximum output, of the kind employing a gas turbine prime mover.

It has long been recognised that the gas turbine could provide a convenient means of developing mechanical power as a prime mover and as a traction motor. There are however problems in achieving this objective particularly when applied to the small gas turbine. So far these problems have not received a simple practical solution.

These problems can be classified as follows:

1. Those due to the arduous conditions which must obtain inside existing gas turbines in order to operate at high thermal efficiencies.

2. The problems in designing a reliable means of utilising the power developed at the high rotational speeds which are typical of existing small gas turbines.

3. Those additional problems associated with small closed cycle gas turbines,

   i.e.  a) large, high temperature, high pressure, heat transfer surfaces

   b) lubrication problems

   c) sealing problems.

- 2 -

Furthermore it has long been recognised that for a gas turbine with a given output, the size of the turbine varies inversely with the basic pressure of the working fluid, other factors remaining constant.

Also it is recognised that for an electrical machine with a given output the size of the machine varies inversely with the speed of rotation of the rotor, other factors remaining constant.

Another additional problem, in connection with electrical machines, is the greater losses (eddy current and hysteresis) associated with high speed rotation in existing generators of the conventional type.

The present invention is based on the realisation that if appropriate steps are taken, and the correct design parameters are adopted for a small closed cycle gas turbine and also for the electrical generator, then a machine can be built which incorporates an electrical generator integral with the turbine rotor and the turbine casing, and the problems caused by the items 1-3 above solved.

The main problems listed at 1-3 above are solved, in order to carry this invention into effect in the following ways:-

1.i)    High temperature conditions.

These are avoided by choosing a working cycle operating at a very low compression ratio (about 2:1).

ii) High stress conditions in the turbine moving parts.

These are reduced by increasing the density of the working fluid (approximately 7 times). To this end the working fluid is enclosed in a sealed environment maintained at high pressure, e.g. air at about 7 atmospheres pressure. This enables the rotational speed, gas volumes and gas velocities to be reduced, thus in turn reducing the overall disc and blade stresses. This saving in stress enables the turbine to be designed using such materials as ceramic thus effecting further savings in stress.

iii) Abrasive and corrosive effects are avoided by excluding the combustion gases from the turbine, compressor and regenerator surfaces.

2. Although by means of the above measures the rotational speed may be made relatively low for the size of turbine herein contemplated, as with all turbines a gearbox would be costly, relatively unreliable and inefficient. Difficulties arising from the turbine speed which is relatively high in terms of electrical generation may be overcome by employing a high speed electrical generator of the disc type, directly coupled to the turbine rotor and sealed in the same casing therewith. This converts the mechanical energy to electrical energy and a gearbox is therefore unnecessary.

The voltage rating and power output may be fully controlled by electrical, electronic or electro-mechanical methods.

3.a) Large, high temperature and high pressure heat transfer surfaces are avoided by raising the pressure of the working fluid as above stated.

3.b) The lubrication problems associated with the closed cycle are mainly associated with the lubricant contaminating the working fluid. This problem is therefore overcome by using the working fluid as the lubricant (in this case air).

3.c) The sealing problems normally associated with the closed cycle become less serious if air is the working fluid. However by incorporating the generator within the turbine casing as above stated the problem of a moving seal is avoided since the electrical output can be extracted through static sealed-in insulating leads.

A basic problem associated with electrical machinery arises from eddy current, and hysteresis losses associated with iron magnetic circuits at high frequencies. These are avoided in carrying out the present invention by using a generator of a kind substantially free of iron in the armature. Such a generator may be in the form of a disc generator using permanent magnets and an armature in disc-shaped configuration which is substantially free of iron or contains iron only in a low loss, powder or like form.

By adopting the principles outlined above a turbine and generator can be designed which are matched in size, and very easy to construct using one set of bearings for the combined turbo-generator, embodied in a common, sealed, casing.

According to the present invention therefore, there is provided a turbo electric generator of less than 1000 kw maximum output comprising a gas turbine prime mover and an electric generator, said gas turbine operating on a closed circuit system and said electric generator being of a type having an armature sufficiently free of continuous magnetic material to generate alternating electric power at a frequency which is at least a small multiple of the rotational speed of said turbine without prohibitive hysteresis and like iron losses, wherein said turbine and said generator are coupled directly together by a coupling which extends between the space housing said turbine and the space housing said generator.

According to a preferred feature of the invention the gas turbine prime mover operates at a low compression ratio in the compression stage following the output of the working turbine.

According to another preferred feature of the invention the closed circuit for the working fluid of said gas turbine is maintained at elevated pressure.

According to yet another preferred feature of the invention the turbine and the generator are contained in contiguous pressurised spaces and are coupled directly together by a coupling shaft.

According to the invention in one form the turbine and generator are housed in separate compartments of a pressure housing, a coupling shaft which couples the turbine to the generator passing through a wall common to said pressurised spaces.

According to the invention in another form the turbine and generator are housed in a common pressurised housing.

According to a preferred feature of the invention the load turbine providing output from the prime mover and the rotor of the electric generator are mounted on a common shaft.

According to a preferred feature of the invention the electric generator is a permanent magnet machine. Preferably it is in the form comprising a series of axially aligned disc-shaped winding assembles interleaved with a coaxial series of disc-shaped permanent magnet assemblies providing magnetic lines of force parallel to the common axis of said winding and magnet assemblies, said assemblies being mounted for rotation relative to one another. Preferably said series of permanent magnet assemblies is rotatably mounted as the rotor of the machine and the series of winding assemblies is fixedly mounted as the stator thereof.

According to a preferred feature of the invention moreover the prime mover comprises a closed circuit gas turbine in which the compressor delivering the working fluid to the heat regenerator works at a compression ratio lying between the limits 1.5:1 and 3:1. The preferred compression ratio is 2:1.

According to yet another preferred feature of

- 8 -

the invention the working fluid for the prime mover turbine is air and the pressure within the working fluid circuit is not less than 4 atmospheres. Preferably the pressure employed is of the order of 6.5-7.5 atmospheres.

According to yet another preferred feature of the invention the output turbine of the prime mover and the rotor of the electric generator are mounted on gas lubricated bearings.

References herein to the turbine and generator being directly coupled are intended to convey that no gearing is interposed between the two elements, so that the generator is driven at the speed of the turbine.

In order that the invention may be better understood it will now be further described with reference to the accompanying drawings in which:-

Figure 1 is a representation of a turbo electric generator according to the invention;

Figure 2 is a comparative diagram showing the operating cycle of a machine according to the invention compared with a more conventional open cycle machine;

Figure 3 is a diagram showing how the brake thermal efficiency of a closed cycle gas turbine varies with compression ratio;

Figure 4 is a partial longitudinal cross-section; and

Figure 5 is a partial perspective view of a permanent magnet electric generator for use in a turbo electric generator according to the invention.

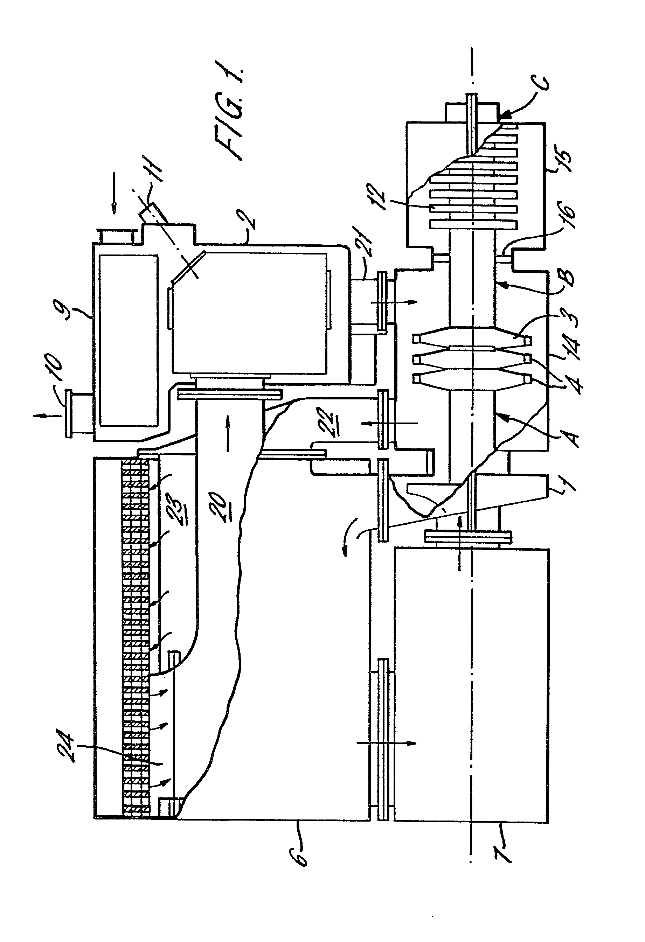

The machine illustrated in Figure 1 comprises a compressor 1. which supplies operating gas via a regenerator 6 and heating unit 2 to the main or load turbine 3. In line with the main turbine 3 and downstream of it is a compressor turbine 4 which is mounted on the same shaft as compressor 1. Indeed it may be formed of sintered material integrally therewith. From the compressor turbine 4 the cycle gas is routed through the regenerator 6 to the heat sink or radiator 7.

Combustion air is introduced via fan 8 through an exhaust gas regenerator 9 to the combustion zone of the heater unit 2 exhaust gases being routed through the exhaust gas regenerator 9 to the exhaust 10.

On the same shaft as the main turbine 3 there is mounted an electrical generator indicated generally by the reference numeral 12. Instead of a conventional generator having a rotor carrying a field winding energised through slip rings and a stator also carrying a winding from which output is extracted, the generator 12 is of the kind known as a disc generator. This type of generator will be further described below.

The regenerator 6 has a central core 20 which delivers pre-heated working fluid (air) to the heating unit 2. Fuel introduced through fuel inlet 11 is burnt with air supplied through inlet 8 _via_ exhaust regenerator 9 to the combustion zone in heater 2. The products of combustion are exhausted through exhaust outlet 10. The heated working fluid is discharged through manifold 21 into the turbine and does work on the work turbine 3 and the compressor turbine 4. It leaves the turbine housing 14 via manifold 22 and enters the regenerator 6 in the central zone 23 surrounding core 20.

Surrounding the central zone is a system of interleaved coils, indicated diagrammatically in cross-section at 24. The hatched areas represent coils carrying the exhaust gas from the turbine which is delivered to the heat sink or radiator 7. The interleaved areas not hatched represent coils carrying the compressed working fluid from compressor 1. The compressed working fluid is delivered into these coils and is pre-heated by heat exchange with the turbine exhaust, being finally delivered through the main port 24 into the central core 20 to complete the working fluid circuit.

The individual components of the machine will now be described more fully in turn.

### The Gas Turbine

The invention is believed to be particularly applicable to machines in the range of 300 horse power and upwards. The nature of the machine moreover is such that it can be designed to operate on a variety of fuels including, if desired solid fuel.

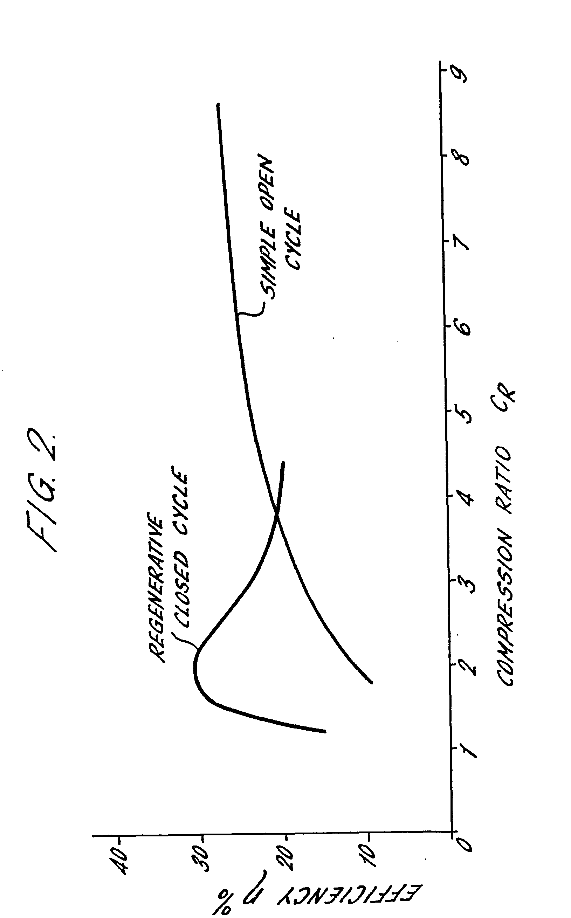

The choice of a closed cycle regime enables a high efficiency to be achieved with a low compression ratio in the turbine operating gas. The variation of efficiency with compression ratio is illustrated in Figure 2 from which it will be seen that a peak is achieved at a compression ratio around 2:1. A compression ratio between 1.5:1 and 3:1 is preferred. Such a low ratio is not practicable in a small open cycle engine. The low compression ratio employed means that all that is necessary for compression is a single stage centrifugal compressor. Such a compressor gives efficient and stable operation. In the example shown the compressor is driven by a two-stage axial-flow turbine which is preferably designed to have some reaction in the blading.   This enables a lower peripheral velocity for the turbine disc to be used.

The main, or load turbine 3 is first in line with the two stages of the compressor turbine and is enclosed in the same casing.   The turbine parts may be made of sintered material.

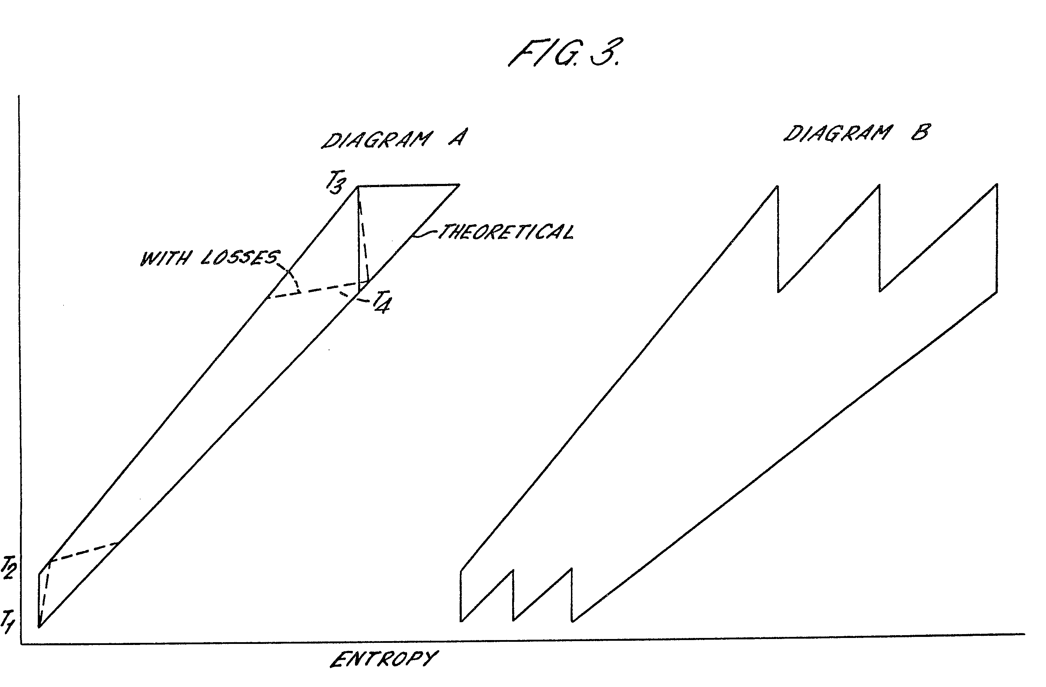

The advantage of choosing a closed cycle machine with low compression ratio is illustrated by the diagrams of Figure 3.   The diagram B on the right hand side of this figure shows a typical temperature/entropy diagram for a large high efficiency turbine set.   The large open cycle regenerative turbine has a series of turbine stages with re-heat in order to provide an approximation to the efficiency of the isothermal carnot cycle.   Similarly compression takes place with inter-cooling for the same reason.

By contrast the diagram A on the left, for a small closed cycle engine of the kind employed in the present invention, illustrates how a high theoretical efficiency is achieved using a lower expansion ratio with no re-heat and no inter-cooling. This effect is achieved by increasing the working pressure of the working fluid.   It is preferred to use air for the working fluid so that complications regarding losses by leakage, replacement of such losses and total renewal of the working fluid are avoided.    This being so the pressure may be increased for example to, say 6.8 atmospheres or 75 pounds per sq.in.    The pressure used should preferably be not less than 4 atmospheres.    Such an increase in working pressure can be achieved in the relatively small size of engine contemplated in this invention without great difficulty and has a number of further advantages.    One such advantage is that gas at this pressure can be used to provide gas bearings for the compressor and working turbines. Such bearings may be used to support the compressor, load turbine and generator shafts at the regions indicated by A, B and C in Figure 1.    Such bearings are known in themselves and need not be further described or illustrated here.

In the machine shown in Figure 1 the load turbine 3 and the generator 12 are shown as occupying two separate housings 14 and 15.    Clearly, the housing 14 which houses the load turbine 3 carries the circulating working fluid and is pressurised to the full working pressure of 6 or 7 atmospheres. The housing 15 housing the generator 12 abuts the housing 14 and the two housings may share a common dividing wall through which the coupling shaft passes.

- 14 -

The housing 14 may be pressurised to the same pressure as that of the working fluid so that there is no requirement for pressure seals where the coupling shaft passes through the dividing wall. Thus pressurisation may be achieved by leakage through from the housing 14 to the housing 15 and may in fact take the form of or be provided in part by a gas supply supplying gas bearings for the turbine and generator shaft. It is not necessary for pressure in the housing 15 to be at the full pressure of the working fluid provided it is adequate to reduce leakage through the shaft seal to an acceptable level. Alternatively the two spaces housing the turbine and the generator may be contained within a common housing which is of course pressurised as a whole to the full pressure of the working fluid.

In another arrangement the pressure in the housing 15 can be above that in the housing 14 and such a situation may arise if the pressurisation of the working fluid circuit is initiated by pumping air into the system during a starting up phase by means of a pump feeding the housing 15. After starting, the pressure in the working fluid circuit will be built up by the heat introduced in the heating unit 2, although it may be necessary to

- 15 -

introduce fresh fluid (probably air) through a suitable valve from time to time to maintain the desired operating pressure.

To start the engine it will be necessary to drive the compressor 1 from an external source. For this purpose the compressor shaft may be brought out through a rotary pressure seal which, after starting, can be covered by a static sealing cap so as to retain the working pressure. It thus becomes unnecessary to provide a high pressure rotating seal through the wall of the housing solely for this starting up process.

Because the engine according to the invention may be designed to operate with very high efficiency the reliability and life of the engine can be improved by working at a lower nozzle inlet temperature than might normally be expected, that is to say at a temperature around $1200^{o}$F. The mean blade height peripheral velocity may be of the order of 600 ft. per sec.

Bearing the above factors in mind the following characteristics for the various components of the proposed engine can readily be expected:-

## The Compressor

Because of the low compression ratio used a single stage centrifugal compressor may be used and this offers various advantages over a multi-stage axial-flow unit. Not only is it cheaper and easier to maintain but its level of performance is more stable at varying speeds. The isentropic efficiency of the compressor can be 0.84 while its mechanical efficiency can be as high as 0.99 if gas bearings are used for its shaft.

## The Load Turbine

An axial-flow turbine is a far more effective unit to incorporate into a small engine than say a mixed or radial flow turbine. Accordingly the isentropic efficiency at the turbine may be 0.99 and its mechanical efficiency 0.99 again assuming the use of gas bearings. The blade reaction is preferably 40% to 50% and a mean blade height peripheral velocity of 600 ft. per second at a rotational speed of 13750 rpm can be employed. A mean blade height diameter of about 10 inches is appropriate.

The compressor turbine may have similar characteristics.

## The Regenerator

The regenerator 6 in Figure 1 is required to be as effective and efficient as possible. It may take the form of a counter-flow heat exchanger and is appropriately in the form of a large cylinder.

Preferably turbine exhaust is introduced along the axis of the cylindrical regenerator into the hot central zone thereof. From the central zone the exhaust gas spirals outwards towards the outer, cool zone, heating the compressed gas from the compressor 1. The compressed gas may be contained in small bore tubing through which it passes to the gas heater 2 or other forms of heat exchanger such as a honeycomb matrix can be used to achieve a high level of heat exchange between the turbine exhaust gases and the compressor output. By introducing the working fluid from the turbine to the central region of the heat exchanger as above stated the effectiveness of the regenerator can be made very high and can be of the order of 0.925. For an engine of the size contemplated in this Example the required heat exchange capacity is for 1,650 btu per sec. at a log mean temperature difference of about $53^{\circ}F$.

The Gas Heater

The gas heater 2 in Figure 1 is also a counter flow heat exchanger. It may be fuelled by gas or may be arranged to be ignited on gas and switched to solid fuel. It is an advantage of the engine employed in this invention that it can be fuelled by a variety of fuels. Since the engine is a closed cycle engine the turbine and compressor elements are protected from combustion products with which they do not come into contact.

The Heat Sink

The requirement here is for a low resistance radiator adequate to reduce the temperature of the working fluid to around 120°F. It should have a capacity of around 500 btu per sec. and a pressure drop of about 1 pound per sq.inch.

The Electric Generator

As stated above the electric generator is of a low-iron loss, preferably a disc type. An electric motor has been proposed and studied in the form of a disc-shaped motor having windings embedded in moulded material such as epoxy resin. One such motor is described in UK Patent No. 1,231,782 and motors of this kind have been discussed in papers delivered to the Institution of Electrical Engineers at a conference in London, March 1976, to an International Conference on Electrical Machines in Brussels, September 1978, and an ERA Seminar in London, January 1979. Reference to these publications will reveal how the disc principle has been applied to small electric motors. We have now realised that the same principle, when applied to electric generation offers an advantage not previously appreciated namely freedom from the iron losses normally associated with iron-cored conventional generators. Iron losses are related to the frequency of the alternating voltage generated and increase approximately as the square of the frequency. Accordingly it is not possible to generate electrical power efficiently at high frequencies by conventional rotary machines so that if the gas turbine is used as prime mover the rotational speed must be reduced mechanically, e.g. by gearing between the prime mover and the generator.

For the successful application of the disc principle to power generation it is proposed to design the generator as a multi-disc machine. The details of design are dictated by the type of electrical supply which the machine is required to deliver. It is envisaged that the engine above described will be required to deliver say 330 horse power at say 13,750 rpm. To accommodate such a power input the electrical machine may comprise 20 discs of say 8 inches diameter. Each stator disc may carry a winding of say an 8 pole configuration so as to deliver an output in the region of 917 Hz. The electrical power available would then be of the order of 225 kw which could be delivered as, say 450 amps at 500 volts. Obviously this output could be converted by solid-state technology to any required frequency, voltage and amperage. For example, a frequency changing circuit using thyristors can be employed. Such a circuit is given in the Electrical Engineers Reference Book, chapter 12 section 40 (M.G. Say). Similarly rectifying circuits using thyristors can be employed to provide d.c. at a voltage level controlled by the thyristors. However a frequency of 917 Hz is suitable for some applications and can be used, rectified to d.c., for example in automotive applications.

As stated above the rotor of the machine is preferably mounted on gas bearings and carries the permanent magnet field assembly. The magnet-carrying discs which are interleaved with the stator discs will each carry as many permanent magnets as there are poles in the winding configuration. These magnets, distributed circumferentially around the face of each disc are magnetised through their thickness, the magnets of one disc being aligned with those of the next so as to present alternately north and south poles in a continuing sequence axially of the assembly.

A continuous magnetic field is thus provided by each series of magnets in a path parallel to the axis of the machine, there being, say, eight magnets to each disc and therefore eight such magnetic field paths, distributed around the axis of the machine. The magnetic circuit is completed by iron or steel rings at each end of the machine, mounted on end plates adjacent the end magnet disc at each end of the machine. The stator windings may be produced as printed windings embedded in moulding material of a suitable kind. For example they may be embedded in epoxy resin reinforced with glass fibre. Alternatively wire windings can be used which may be fired into ceramic discs. A winding disc is incorporated between each pair of magnet discs so as to run in the magnetic field in each of the gaps between successive discs. The winding configuration will be in accordance with the pole number of the machine. In the case of eight magnets per disc above suggested an eight pole winding would be used, the geometry of the winding being matched to the magnetic field configuration determined by the magnet arrangements on the magnet discs.

The windings may be formed in two halves which are brought together to embrace the magnetic rotor assembly, connections being made as necessary to combine the outputs from the coil assemblies of each winding disc and from one winding disc to another. Because there is no iron in the winding discs the arrangement avoids the iron losses associated with more conventional generators and conversion of the mechanical input to electrical output can take place with an efficiency in excess of 90%.

The winding configuration on the stator disc can be such as to provide a poly-phase output and switching can be provided to allow series/parallel or star/delta connection of the component coils.

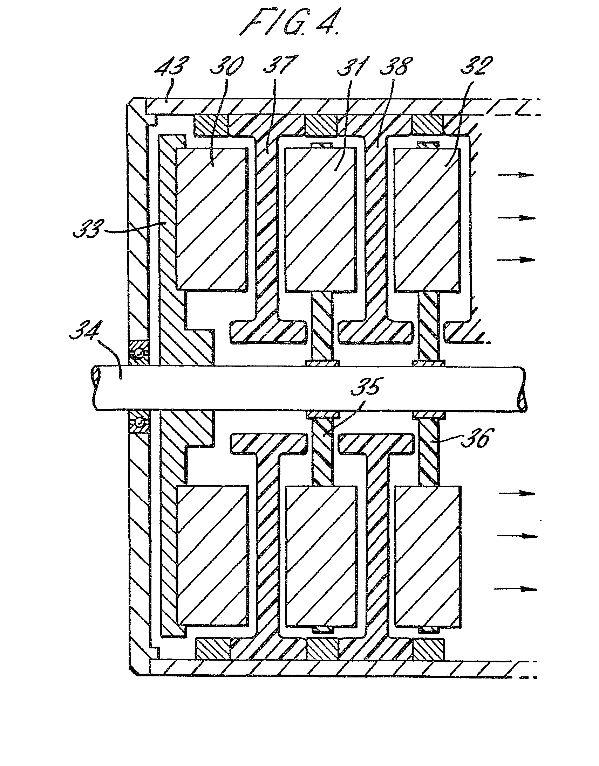

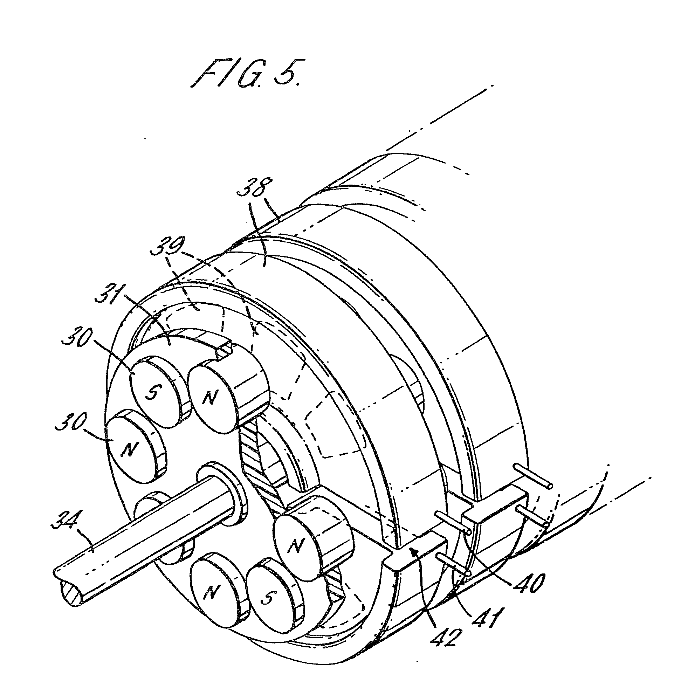

By way of example an electric generator of a kind to be used in carrying out this invention is illustrated in Figures 4 and 5. In the longitudinal section shown in Figure 4, three disc assemblies of permanent magnets are shown at 30, 31 and 32. These may be regarded as the first three assemblies in a series extending to say 21 magnet discs. The end assembly 30 is shown mounted on an end ring 33 made of magnet material. This ring provides a flux return path linking the end faces of the magnets of assembly 30 and thus completing the flux paths of all the axially aligned magnet arrays. As will be seen from Figure 5 the magnets are cylindrical in shape. They are magnetised in the direction of their cylindrical axes and are aligned so as to provide lines of force parallel to the rotary axis of the machine as represented by the shaft 34. Each assembly, as will be seen from Figure 5, includes eight magnets and successive magnets are reversedly oriented so that each successive bundle of axially aligned lines of force is in the reverse direction.

The magnet arrays 31 and 32 are mounted on supporting discs 35 and 36 respectively. The supporting discs 35 and 36 are made of non-magnetic material and are mounted on the shaft 34 so that they may be rotated by the drive from the turbine.

In between successive pairs of magnet discs there are located winding discs 37, 38 etc. In the example in which the series of magnet discs runs to 21 as above suggested, the number of winding discs will be 20.   In the winding disc 38 shown in the partial view of Figure 5 the windings are embedded in a moulding material such for example as epoxy resin or a ceramic and have been suggested by the dotted outlines 39.   The configuration of the windings will be such as to identify eight poles corresponding to the eight bundles of magnetic flux generated by the eight rows of magnets distributed around the shaft 34 on the magnet discs.   The precise configuration of the windings, the number of turns and so on will be dictated by the voltage and current requirements of the generator.   Connecting wires 40 and 41 are shown brought out from the winding disc.   Two such leads are shown but it will be appreciated that if multi-phase windings are used three or more leads may be required in order to provide tappings to the appropriate parts of the windings.   By means of the leads 40 and 41 the various windings of the successive discs can be inter-connected and connected to output terminals of the machine as may be required.   The inter-connections between successive windings will also be determined by the output characteristics required by the machine.

The winding disc 38 is shown divided at 42 so that it may be assembled in two halves around the shaft 34. Clearly the two halves of the winding can be connected together in series as may be required by means of the leads 41 and 42. The halves of the winding discs are supported in any suitable manner in an outer casing or framework 43.

It will be observed that the armature of this machine, constituted by the winding discs 37, 38 etc. is entirely free of magnetic material. Indeed the only magnetic material in the machine apart from the permanent magnets themselves are the end rings, that is the ring 33 and a corresponding ring at the other end of the rotor, which provide magnetic return paths for the flux between successive oppositely poled magnets distributed around the shaft 34. By this expedient the machine can be driven at the relatively high speed which the small size of the turbine requires for efficient working, without hysteresis or like iron losses of any significant value. The axially aligned rows of magnets provide a high density magnetic flux and the relatively small thicknesses of the winding discs constitute only relatively small gaps between the magnets so that it is not necessary to include any magnetic material in the armature discs as such. In other words the magnets of successive discs face one another across only small gaps and flux leakage is therefore minimal. It will further be noted that the end rings connecting the magnets of the end discs are not subject to any major alternating magnetic flux so that at most only small losses will be generated in these parts of the magnetic circuit. If it is required to include any magnetic material in the armature winding discs or elsewhere to decrease the reluctance of the magnetic circuit it is preferable to use powder iron materials or other materials having low eddy current losses so that, at the high speed of the turbine the losses will not be prohibitively high.

General

The machine according to the invention provides a simple reliable and highly efficient closed cycle prime mover operable on a wide choice of fuels to provide an electrical output at a high order of overall efficiency. It has been estimated that a machine consisting of a prime mover delivering 330 horse power at 13,750 rpm using a 20 disc generator could supply 225 kw at say 450 amps at a voltage of 500 volts and a frequency of 917 Hz. It lends itself to the use of modern materials for the component parts. For example the turbine blades could be made of ceramic materials and the generator discs of ceramic or fibre glass construction.

The permanent magnets may be of rare earth, cobalt or Ferrite magnetic material.

The machine moreover lends itself to a compact design.   For example, the disc type generator above described could be accomodated in an overall length of 1 metre.

CLAIMS

1. A turbo-electric generator of less than 1000 kw maximum output comprising a gas turbine prime mover and an electric generator, said gas turbine operating on a closed circuit system for the working fluid and said electric generator being of a type having an armature sufficiently free of continuous magnetic material to generate alternating electric power at a frequency which is at least equal to the rotational speed of said turbine without prohibitive hysteresis and like iron losses, characterized in that said turbine and said generator are coupled directly together by a coupling which extends between the space housing said turbine and the space housing said generator.

2. A turbo-electric generator according to Claim 1 wherein the closed working fluid circuit is pressurised.

3. A turbo-electric generator according to Claim 2 wherein the space containing said generator is pressurised to substantially the same pressure as that of the working fluid.

4. A turbo-electric generator as claimed in any one of Claims 1 to 3 wherein said turbine and said generator are housed in a common housing pressurised to a pressure in excess of 4 atmospheres.

5. A turbo-electric generator according to any one of the preceding Claims wherein the electric generator is a permanent magnet machine.

6. A turbo-electric generator according to any one of the preceding Claims wherein said electric generator comprises a series of axially aligned disc-shaped winding assemblies and a coaxial series of disc-shaped permanent magnet assemblies, said permanent magnet assemblies being interleaved with said winding assemblies and providing magnetic lines of force parallel to the common axis of said winding and magnet assemblies, said assemblies being mounted for rotation relative to one another.

7. A turbo-electric generator according to Claim 6 wherein said permanent magnet assemblies are mounted on a shaft as the rotor of said electric generator and wherein said shaft is mounted in line with the output shaft of said turbine and is directly coupled thereto or formed integrally therewith.

8. A turbo-electric generator according to any one of the preceding Claims wherein the compressor driving said working fluid in its closed circuit operates at a compression ratio between 1.5:1 and 3:1.

9. A turbo-electric generator according to any one of the preceding Claims wherein the working fluid of said turbine is air.

10.    A turbo-electric generator according to any one of the preceding Claims wherein the rotor of said turbine, the compressor of said turbine, and/ or the rotor of said electric generator is/are mounted on gas lubricated bearings.

FIG.1.

FIG. 2.

*SIMPLE OPEN CYCLE*
*REGENERATIVE CLOSED CYCLE*

Axis labels: EFFICIENCY $\eta$ % (vertical), COMPRESSION RATIO $C_R$ (horizontal)

FIG. 3.

DIAGRAM A

DIAGRAM B

THEORETICAL

WITH LOSSES

$T_3$

$T_4$

$T_2$

$T_1$

ENTROPY

0026584

FIG. 4.

FIG. 5.

European Patent
Office

**EUROPEAN SEARCH REPORT**

Application number

EP 80 30 3085.7

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| | US - A - 3 024 366 (M. YANAGIMACHI)<br>* column 1, lines 44 to 61 *<br>-- | 1-4 | H 02 K 7/18<br>H 02 K 21/24<br>F 02 C 6/00 |
| | DE - A1 - 2 415 447 (KRAFTWERK UNION AG)<br>* page 1, paragraph 1; fig. 1, 2 *<br>-- | 1 | |
| | DE - U - 1 865 585 (KLÖCKNER-HUMBOLDT-DEUTZ AG)<br>* page 1, last paragraph *<br>-- | 1 | **TECHNICAL FIELDS SEARCHED (Int.Cl.3)** |
| | DE - A1 - 2 847 203 (ASEA AB)<br>* claim; fig. 1 and 2 *<br>& GB - A - 2 010 022<br>-- | 5-7 | F 02 C 6/00<br>H 02 K 7/00<br>H 02 K 21/00 |
| | BE - A - 564 036 (T.I.S. VERMEIREN)<br>* page 9, paragraph 1 *<br>-- | 5-7 | |
| | GB - A - 1 491 026 (CANADIAN GENERAL ELECTRIC CO. LTD.)<br>-- | 5-7 | |
| A | US - A - 2 743 375 (L.W. PARKER)<br>* column 1, lines 18 to 66 *<br>---- | | **CATEGORY OF CITED DOCUMENTS**<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| | | | |
|---|---|---|---|
| X | The present search report has been drawn up for all claims | | |
| Place of search<br>Berlin | Date of completion of the search<br>18-12-1980 | Examiner<br>GESSNER | |

EPO Form 1503.1 06.78